# EUROPEAN PATENT APPLICATION

(11) **EP 2 682 170 A1**
(43) Date of publication of application: **08.01.2014**
(21) Application number: 12004938.2
(22) Date of filing: 03.07.2012
(51) Int. Cl.: B01D 17/12

(54) **Cryogenic phase separator with rod actuated outlet valve**

(71) Applicant: Linde Aktiengesellschaft, 80331 Munich (DE)
(72) Inventor: Malas, Akin, 85757 Karlsfeld (DE)
(74) Representative: Gellner, Bernd

(57) **Abstract**

The invention relates to a gas phase separator for removing gas phases from a liquid gas, comprising: a separator container (110) with an inlet port (112) for liquid gas and an outlet port (120) for discharging liquid gas, from which gas phases have been removed, and a gas vent (140) for releasing gas phases from the container, wherein the outlet port (120) is openable and closeable by means of a solenoid valve unit (130) comprising a valve plug (136) for opening and closing the outlet port (120) and a valve actuating member (132), the valve actuating member (132) acting on the valve plug (136) by means of a rod (134).

## Description

The invention relates to a cryogenic phase separator according to the preamble of claim 1.

In numerous cryogenic applications, it is necessary to deliver liquid gas containing an as little gas phase as possible to a point of use. To achieve this, phase separators are used. However, for example due to heat leaks and heat generation within storage containers, solenoid valves used for dosage and/or delivery of liquid gas, and also the phase separator itself, a portion of a liquid gas will vaporize into a gas phase.

Solenoid valves and flow control valves for cryogenics can not be provided as completely sealed units. Thus, as these valves generate heat during use, which leads to generation of gas phases due to their immersion in liquid gas, these valves are generally coupled with gas phase separators.

Phase separators are generally used before or after (i.e. upstream or downstream of) the solenoid valves. When used before the valves, the gas can not be eliminated at the outlet port (nozzle) near the point of use. In case of usage after the valve, the spray pulsing or flow control is not sufficiently accurate. Therefore, in cases where the response time for opening and closing of a valve is important, using such a solenoid valve in combination with a gas phase separator will not provide a sufficiently continuous liquid gas supply at the point of use.

The object of the invention is to minimize heat generation within a gas phase separator in order to minimize gas phases at a point of use.

This object is achieved by a gas phase separator comprising the features of claim 1.

Advantageous embodiments of the invention are the subject-matter of the dependent claims.

According to a preferred embodiment, the rod of the solenoid valve unit used extends, preferably horizontally, through the liquid gas in a lower part of the container. Thus, it can be assured that all components of the solenoid valve unit are effectively cooled by the liquid gas.

Advantageosly, the outlet port is provided in a first portion of a wall of the separator container, and the valve actuating member is provided in a second, opposite portion of the wall. Hereby, the distance between the valve actuating member, which can generate unwanted gas phases due to heating effects, and the outlet port can be maximized. In case of a cylindrical container wall, the outlet port is preferably provided in a position 180° displaced from the position of the valve actuating member. In case of for example four separate walls forming the separator container wall, said components are advantageously provided in opposite walls.

It is preferable that the rod has a length of at least 5 cm. Obviously, depending on the size of the separator container, larger or smaller lengths can also be preferable, for example 2 cm, 10 cm, 20 cm, 30 cm, 40 cm or 50 cm. For gas phase separators used for example in industral plants, lengths of 1 m or larger are also possible. This length definition shall include that the distance between the valve actuating member and the valve plug or the outlet port essentially corresponds to the respective lengths mentioned.

Preferably, the rod is made of stainless steel, or any other expedient non-magnetic material.

Advantageously, the valve plug for opening and closing the outlet port is conically shaped, interacting with a correspondingly shaped nozzle section of the outlet port. Such a conically shaped valve plug, preferably also comprising sealing means, acts to open and close the outlet port in a reliable way, whereby dosages of discharged liquid gas can be precisely set.

According to a further preferred embodiment, the valve actuating member is provided to control the flow of liquid gas discharged from the outlet port. The control can comprise a time control as well as a displacement control, i.e. the distance the rod is displaced from its position, in which the plug completely closes the nozzle section. A corresponding control device can be provided within the actuating member or as a separate unit.

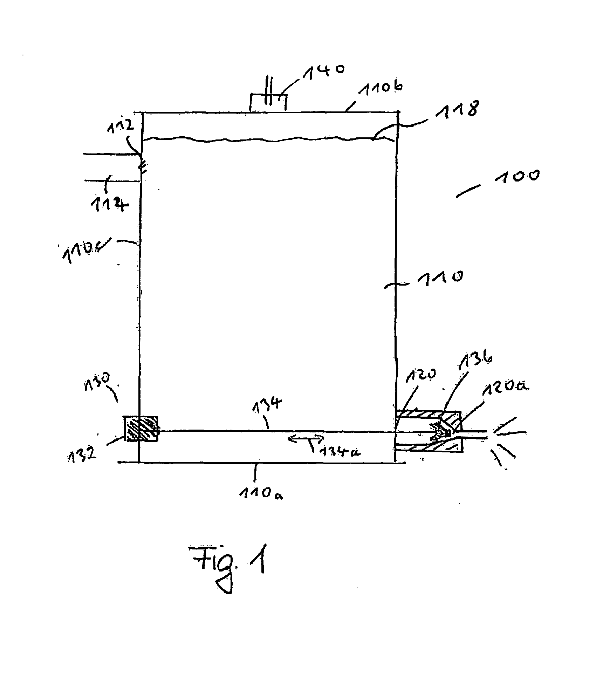

Other features and advantages of the invention will now be described with reference to the drawings, in which
- Figure 1: is a schematic view of a preferred embodiment of a gas phase separator according to the invention.

The gas phase separator according to the invention is generally designated 100. It includes a container 110, which may be positioned inside a sub-cooler container (not shown). The container comprises a base 110a, an upper side 110b and a side wall or side walls 110c.

The container 110 comprises an inlet port 112 connected to an inlet duct 114 for passing liquid gas into the container 110.

Furthermore, the container 110 comprises an outlet port 120 for discharging liquid gas, from which gas phases have been removed, from the container. The output port 120 is provided with a nozzle 120a, with which a solenoid valve unit 130 interacts, as will be described in more detail below.

The container 110 also comprises a gas vent 140, through which gas phases separated from the liquid gas can exit the container 110.

The inlet port 112 is provided in an upper region of the container. The outlet port 120 is provided in a lower region of the container, i.e. in the vicinity of the base 110a of the container 110. The gas vent 140 is preferably provided in the upper side 110b of the container 110.

A liquid level 118 is maintained within the container 110. The inlet port 112 is preferably provided below this liquid level 118 in the side wall 110c of the container 110.

The solenoid valve unit 130 comprises a valve actuating member 132, which actuates a valve rod 134 on the end of which is provided a conical plug 136, the shape of which corresponds to the shape of a nozzle 120a of outlet port 120. The nozzle 120a thus forms a seat for the valve plug 136.

The rod 134 is preferably made of stainless steel or some other non-magnetic material.

As can be seen from Figure 1, the valve actuating member 132 is located at a distance from plug 136. Preferably, the valve actuating member 132 is provided in or in the vicinity of a first side wall 110c of the container 110, and the outlet port 120 in an opposite wall. Obviously, in case of e.g. a cylindrical wall of container 110, valve actuating member 132 and outlet port 120 are provided in opposite sections of this one wall.

Opening and closing of outlet port 120, in order to discharge liquid gas, from which gas phases have been separated, through nozzle 120a is effected by actuation of the valve actuating member 132. Hereby, the conical plug 136 will open and close the nozzle 120a. Actuation of member 132 can be effected by a control device (not shown).

As the valve actuating member 132 of the solenoid valve unit 130 will generate heat, this will lead to generation of gas phases in the vicinity of valve actuating member 132. However, due to the distance to the nozzle 120a, provided by the rod 134, gas phases thus created by the valve actuating member 132 will rise to the surface 118 of the liquid gas without reaching the vicinity of outlet port 120. Thus, these gas phases will be able to exit the system via gas vent 140. Any unwanted contamination of the liquid gas exiting the system via nozzle 120a can thus be avoided.

It is especially advantageous that the complete mechanical structure of the solenoid valve unit 130, especially the actuating member 132, as far as it is provided within the container 110, is immersed in liquid gas, in order to provide effective cooling.

Be it noted that the valve actuating member 132 can be provided as an electrically or pneumatic pulsating valve unit.

The flow of liquid gas ejected via nozzle 122a can be adjusted by controlling the displacement of rod 134, indicated by double pointed arrow 134a. The nozzle preferably discharges liquid gas in spray form.

The invention is especially useful in applications where On/Off-Control or a flow control profile requires precision and immediate response.

The present application is especially useful in case of phase separation for liquid nitrogen.

## Claims

1. Gas phase separator for removing gas phases from a liquid gas, comprising:
a separator container (110) with an inlet port (112) for liquid gas and an outlet port (120) for discharging liquid gas, from which gas phases have been removed, and a gas vent (140) for releasing gas phases from the container,
wherein the outlet port (120) is openable and closeable by means of a solenoid valve unit (130) comprising a valve plug (136) for opening and closing the outlet port (120) and a valve actuating member (132), the valve actuating member (132) acting on the valve plug (136) by means of a rod (134).

2. Gas phase separator according to claim 1, wherein the rod extends through the liquid gas in a lower part of the container (110).

3. Gas phase separator according to claim 1 or 2, wherein the outlet port (120) is provided in a first portion of a wall (110c) of the separator container (110), and the valve actuating member (132) is provided in a second, oppositely located portion of wall (110c).

4. Gas phase separator according to claim 1 or 2, wherein the rod (134) has a length of at least 5 cm.

5. Gas phase separator according to any one of the preceding claims, wherein the rod is made of stainless steel.

6. Gas phase separator according to any one of the preceding claims, wherein the valve plug (136) is conically shaped, interacting with a correspondigly shaped nozzle section (120a) of outlet port (120).

7. Gas phase separator according to any one of the preceding claims, wherein the valve actuating member (132) is provided to control the flow of liquid gas discharged from the outlet port (120).
